# EUROPÄISCHE PATENTSCHRIFT

(11) **EP 3 024 791 B1**
(45) Veröffentlichungstag und Bekanntmachung des Hinweises auf die Patenterteilung: **27.05.2020**
(21) Anmeldenummer: 14738831.8
(22) Anmeldetag: 11.07.2014
(51) Int. Cl.: C03C 17/00, C03C 17/30, B29C 59/02, B29C 59/04, B29C 35/08, C03C 19/00

(54) **VERFAHREN UND VORRICHTUNG ZUM EINPRÄGEN EINER STRUKTUR AUF EINEM MIT EINEM LACK BESCHICHTETEN SUBSTRAT**
METHOD AND DEVICE FOR EMBOSSING A STRUCTURE ON A SUBSTRATE COATED WITH A VARNISH
PROCÉDÉ ET DISPOSITIF SERVANT À IMPRIMER UNE STRUCTURE SUR UN SUBSTRAT RECOUVERT D'UNE PEINTURE

(30) Priorität: 24.07.2013 DE 102013107909
(43) Veröffentlichungstag der Anmeldung: 01.06.2016
(73) Patentinhaber: Schott AG, 55122 Mainz (DE)
(72) Erfinder: RUDIGIER-VOIGT, Eveline, 55128 Mainz (DE); BOCKMEYER, Matthias, 55116 Mainz (DE); GERBAN, Jörn, 55257 Budenheim (DE); STOLZ, Claudia, 55218 Ingelheim (DE)
(74) Vertreter: Blumbach · Zinngrebe Patentanwälte PartG mbB
(86) Internationale Anmeldenummer: PCT/EP2014/064961
(87) Internationale Veröffentlichungsnummer: WO 2015/010929

(56) Entgegenhaltungen:
- WO-A1-2005/003822
- WO-A2-01/52299
- US-A1- 2005 212 182
- US-A1- 2009 061 116
- DATABASE WPI Week 201379 Thomson Scientific, London, GB; AN 2013-V89218 XP002729612, -& WO 2013/176146 A1 (ASAHI GLASS CO LTD) 28. November 2013 (2013-11-28)

## Beschreibung

### Gebiet der Erfindung

Die Erfindung betrifft ein Verfahren sowie eine Vorrichtung zum Einprägen einer Struktur auf einem mit einem Lack beschichteten flächigen Substrat. Insbesondere betrifft die Erfindung das Einprägen von Strukturen auf Glas- oder Glaskeramikscheiben, welche mit einem aushärtbaren Polysiloxan- oder Sol-Gel-Lacksystem beschichtet sind.

### Hintergrund der Erfindung

Verfahren zum Einbringen von Strukturen auf Glas- oder Glaskeramiksubstraten, welche mit einem Sol-Gel-Lacksystem oder einem Polysiloxan-Lack beschichtet sind, sind bekannt.

Das Dokument WO 2011/085997 A1 beschreibt das Einprägen einer Struktur mittels eines flächigen Stempels auf einem Glas- oder Glaskeramiksubstrat.

Dabei wird ein mittels UV-Licht härtbares Lacksystem aufgebracht. Sodann wird ein Stempel mit der gewünschten Struktur aufgedrückt. Das Lacksystem umfasst eine mittels UV-Strahlung härtbare Komponente, welche durch den Stempel hindurch ausgehärtet wird, d.h. die Polymerisation des Lacks beginnt.

Hierdurch wird das Lacksystem zumindest derart vorgehärtet, dass dieses nach dem Abziehen des Stempels der Gestalt ist, dass die Struktur erhalten bleibt. Der Lack kann sodann in weiteren Verfahrensschritten, beispielsweise thermisch in einem Bereich von 150 - 800 °C, ausgehärtet werden, um seine Endfestigkeit zu erreichen. Es ist insbesondere vorgesehen, dass organische Bestandteile des Lackes bei diesem letzten Härtungsschritt ausgebrannt werden. Das gilt insbesondere für Aushärtetemperaturen größer als 300°C.

Die aufgebrachte Struktur kann der optischen Anmutung des so hergestellten Verbundmaterials dienen. Beispielsweise lassen sich in Verbindung mit einer weiteren Schicht Verbundmaterialien erzeugen, welche die Anmutung einer gebürsteten Edelstahloberfläche haben.

Aber auch Strukturierungen für haptische Funktionen, etwa als Grifffläche, sind denkbar.

Ebenso realisierbar ist die Herstellung optischer Bauelemente, wie etwas diffraktive optische Elemente, wie beispielsweise Gitter o.ä., oder refraktive Elemente, wie beispielsweise Lichtlenkstrukturen o.ä..

Die Druckschrift WO 2005/003822 A1 zeigt das Aufbringen einer strukturierten Beschichtung auf einem Display, welche insbesondere fotochemisch gehärtet wird. Dabei wird mittels einer Rolle eine Art Stempel von einer Seite her auf dem Substrat abgerollt und in die andere Richtung wieder entfernt.

Problematisch bei derartigen bekannten Verfahren ist, dass sich Lufteinschlüsse bilden können. Des Weiteren kann es beim Aufbringen des Stempels insbesondere aufgrund unterschiedlicher Andruckstärken zur inhomogenen Schichtdickenverteilung kommen, was Fehlstellen in der strukturierten Schicht zur Folge hat. Diese unterschiedliche Andruckstärke kann insbesondere durch Unebenheiten des zu prägenden Substrats zustande kommen.

Weiter kann es dazu kommen, dass die verwendeten Polymerstempel nicht formstabil bleiben, indem beispielsweise eine Längung derselben auftritt, was ebenfalls zu Fehlstellen oder einem ungenauen Übertrag der Struktur des Masters auf den Lack führt.

Das Dokument DE 10 2006 004 644 B4 zeigt ein Verfahren, bei dem eine Matrizenbahn mittels zwei Walzen, ähnlich wie ein Kettenfahrzeug, über das Substrat bewegt wird. Das auf dem Substrat aufgebrachte aushärtbare Material wird mittels einer UV-Lampe durch die Matrizenbahn hindurch ausgehärtet.

Auch diese Vorgehensweise führt zumindest bei hochviskosen Sol-Gel- oder Polysiloxan-basierten Lacken zu Fehlstellen in der Struktur, da die Struktur aufgrund der Bewegung sowie aufgrund der Länge der Matrizenbahn verwischt werden kann.

Zum Aufbringen aus der Praxis sind weiter die thermische Nanoimprint-Lithographie, die Step-and-Flash-Imprint-Lithographie, die Fotolithographie sowie die Elektronen- oder Ionenstrahllithographie bekannt. All diesen Verfahren ist gemein, dass man mit relativ hoher Präzision Mikrostrukturierungen auf Substraten aufbringen kann. Allerdings sind diese Verfahren sowohl aufgrund der nötigen Verfahrensschritte als auch aufgrund der hierfür verwendeten Anlagen teuer und meist für große Substrate ungeeignet.

### Aufgabe der Erfindung

Der Erfindung liegt demgegenüber die Aufgabe zugrunde, ein Verfahren sowie eine Vorrichtung bereitzustellen, mittels der auf einem flächigen Substrat aufgebrachte Lacksysteme mit einem Stempel auf einfache Weise strukturiert werden können, wobei die Gefahr von Fehlstellen oder Blaseneinschlüssen in der Struktur eliminiert wird. Insbesondere sollen auch großflächige Substrate, insbesondere größer 25 cm, mit hoher Geschwindigkeit, also mit hohem Anlagendurchsatz, strukturiert werden können.

### Zusammenfassung der Erfindung

Die Aufgabe der Erfindung wird bereits durch ein Verfahren sowie eine Anlage zum Einprägen einer Struktur auf einem mit einem lackbeschichteten flächigen Substrat nach einem der unabhängigen Ansprüche gelöst.

Bevorzugte Ausführungsformen und Weiterbildungen der Erfindung sind dem Gegenstand der Unteransprüche zu entnehmen.

Die Erfindung betrifft ein Verfahren zum Einprägen einer Struktur auf einem mit einem Lack beschichteten flächigen Substrat.

Die Erfindung betrifft insbesondere Glas- oder Glaskeramikscheiben, welche mit einem Polysiloxan- oder Sol-Gel-basierten Lack beschichtet sind.

Verwendet wird das Verfahren insbesondere zum Beschichten von Scheiben wie diese beispielsweise als Gebäudeverglasung, als Deckscheibe für Photovoltaikmodule, für Küchengeräte oder für optische Anwendungen verwendet wird.

Die eingeprägte Struktur kann dabei sowohl rein der optischen Anmutung des hergestellten Verbundmaterials dienen als auch, insbesondere wenn diese transparent ausgebildet ist, die optischen Eigenschaften des Verbundmaterials verbessern, insbesondere hinsichtlich der Ein- oder Auskopplung von Licht bzw. optische Funktionen auf einfachen Subtraten prinzipiell ermöglichen.

Gemäß der Erfindung wird ein flächiger Stempel auf dem Substrat abgelegt, wobei der Stempel an einer Seite des Substrats befestigt ist und mittels einer Walze zu einer anderen Seite des Substrats hin abgelegt wird.

Der als Flächenmaterial ausgebildete Stempel ist also an einer Seite relativ zum Substrat fixiert, also entweder an dem Substrat oder an der Anlage, auf welcher das Substrat ruht, befestigt, und wird mittels einer Walze auf das Substrat abgerollt.

Sodann kann der Stempel auf dem Substrat ruhen. Gegebenenfalls wird dieser durch eine Halterung fixiert, um ein Verrutschen zu vermeiden.

Während der Stempel auf dem Substrat ruht, kann durch den Stempel eine Struktur in den Lack auf das Substrat eingeprägt werden.

Durch das Ablegen in Verbindung mit einer einseitigen Fixierung entsteht eine Fließfront beim Ablegen, wodurch Lufteinschlüsse weitgehend vermieden werden.

Das Substrat ruht dabei vorzugsweise horizontal auf eine Trägerplatte.

Der Stempel ist vorzugsweise größer als das Substrat oder der zu strukturierende Bereich auf dem Substrat. Das Ablegen des Stempels kann zum einen dadurch erfolgen, dass der Stempel in einem vorderen Bereich des Substrats aufgelegt wird. Sodann wird der Stempel von oben abgelassen und gleichzeitig mit einer Vorwärtsbewegung über eine Walze angedrückt abgelegt. Dabei wird sichergestellt, dass der Stempel während des weiteren Ablegens sich nicht verschiebt oder verrutscht.

Gemäß einer anderen Ausführungsvariante wird der Stempel vor der zu strukturierenden Fläche abgelegt und, zumindest teilweise um die Walze gebogen, kontinuierlich über den Lack geführt.

Der Winkel des noch nicht abgelegten Stempelbereiches gegenüber dem Substrat beträgt bei einer bevorzugten Ausführungsform der Erfindung mehr als 45°, bevorzugt mehr als 75° und besonders bevorzugt mehr als 80°. So wird das Bilden einer Fließfront beim vollständigen Ablegen des Stempels verbessert.

Gemäß der Erfindung sind Ablegegeschwindigkeiten von über 5 mm/s, bevorzugt über 30 mm/s und besonders bevorzugt mehr als 50 mm/s möglich. Insbesondere liegt die Stempelablegegeschwindigkeit zwischen 5 mm/s und 500 mm/s, bevorzugt zwischen 15 mm/s und 250 mm/s und besonders bevorzugt zwischen 25 mm/s und 100 mm/s.

Nach dem Ablegen liegt der Stempel vorzugsweise zumindest 0,1 - 10 s in Ruhe und der Lack wird mittels Licht oder thermisch derart gehärtet, dass die Struktur stabil ist.

Vorzugsweise wird durch den Stempel hindurch gehärtet, insbesondere mittels UV-Licht.

Es versteht sich, dass im Anschluss noch weitere Härteschritte, insbesondere thermische Härteschritte, folgen können.

Weiter ist auch denkbar, den Lack vor dem Prägen vorzutrocknen, um einerseits eventuell noch vorhandenes Lösungsmittel auszutreiben oder den Lack leicht vorzupolymerisieren, insbesondere mittels eines Infrarotlinienstrahlers oder durch eine kurze UV-Behandlung. Weitere Einrichtungen/Möglichkeiten zum Vortrocknen sind dem Fachmann bekannt. So können beispielsweise auch im Lack vorhandene Lösungsmittel zumindest teilweise entfernt werden.

Das Härten des Stempels kann insbesondere direkt nach dem Ablegen durchgeführt werden. Hierzu kann beispielsweise ein Strahler, insbesondere ein Linienstrahler, zeitversetzt mit derselben oder einer langsameren Geschwindigkeit der Walze folgen.

Insbesondere kann eine UV-Lampe verwendet werden, welche UV-Strahlung emittiert. Die Wellenlänge kann insbesondere zwischen 270 und 405 nm liegen.

Vorzugsweise weist der Stempel in demjenigen Wellenlängenbereich, mittels dessen die Härtung durchgeführt wird, eine Transmission von über 50% bevorzugt über 70%, und besonders bevorzugt über 85% auf.

Nach dem Härten wird der Stempel vom Substrat abgehoben. Dieser Schritt wird auch als Entformung bezeichnet.

Vorzugsweise erfolgt das Abziehen entgegen der Ablegerichtung. Es hat sich überraschenderweise herausgestellt, dass so Verformungen der eingeprägten Struktur weitgehend vermieden werden.

Ein Abziehen des Stempels ist aber auch in Ablegerichtung möglich.

Vorzugsweise entspricht der Weg des Stempels beim Abheben einem umgekehrten Ablegeprozess. Der Abhebeprozess kann dabei ohne Kontakt mit der Andruckwalze erfolgen.

Die Geschwindigkeit des Abhebens ist vorzugsweise genauso schnell, besonders bevorzugt 1,5-mal, ganz besonders bevorzugt 2-mal so schnell wie das Ablegen.

Die Erfindung betrifft mithin ein Step-and-Repeat-Verfahren, wobei der Stempel fest in der Anlage eingespannt ist.

Es hat sich herausgestellt, dass der Stempel für mindestens 1.000 Prägeprozesse ohne Reinigungs- und Wartungsschritte verwendet werden kann.

Als Material für den Stempel kann insbesondere ein Polymer, bevorzugt ein Silikon, insbesondere ein zweikomponentiger Silikonkautschuk verwendet werden. Dieses Material kann gegossen und bei Raumtemperatur vulkanisiert werden und hat eine hohe Reißfestigkeit.

Auch die Verwendung eines Polyolefin-Elastomers ist denkbar.

Der Lack weist im nichtgehärtetem Zustand, also in demjenigen Zustand, in dem der Prägevorgang stattfindet, bei einer bevorzugten Ausführungsform der Erfindung eine Viskosität von mehr 500 mPa·s auf.

Bevorzugt liegt die Viskosität zwischen 600 und 1.500 mPa·s und besonders bevorzugt zwischen 800 und 1.100 mPa·s.

Zur Einstellung der gewünschten Viskosität ist insbesondere bei Sol-Gel-basierten Lacken erforderlich, dass der Lack vor dem Einprägen der Struktur vorgetrocknet wird.

Hierzu können beispielsweise Infrarotstrahler verwendet werden.

Dies kann beispielsweise dadurch erfolgen, indem das beschichtete Substrat mit dem lösungsmittelhaltigen Lack mit einer Geschwindigkeit von 1 bis 3 mm/s unter dem Strahler durchgefahren wird, besonderes bevorzugt ist eine Geschwindigkeit von 5 bis 25 mm/s.

Die Leistung des Infrarotmoduls kann dabei, bezogen auf die Länge des Strahlers, 15 bis 100 W/cm, ganz besonders bevorzugt 60 bis 80 W/cm betragen.

Die Linienbreite eines Infrarotlinienstrahlers beträgt vorzugsweise 5 bis 30 mm, besonders bevorzugt 15 bis 20 mm. Der Strahler hat vorzugsweise einen Abstand von 50 bis 60 mm von dem Substrat.

Das Maximum der emittierten Wellenlänge des Infrarotstrahlers beträgt vorzugsweise zwischen 750 nm und 5 µm, besonders bevorzugt wird eine kurzwellige Infrarotstrahlung mit einer Wellenlänge von 2.000 bis 2.200 nm verwendet. Es wird ein Infrarotstrahler mit Gehäuse, besonders bevorzugt mit einem fokussieren Reflektorgehäuse, verwendet.

Für die Aushärtung des Lacks kann ist auch ein aus mehreren Linienstrahlern aufgebautes IR-Strahlerfeld denkbar, welches mindestens die gleiche Fläche abdeckt, wie das Substrat.

Dann kann das Substrat unter Verwendung der o.g. Leistungen sowohl statisch auf seiner gesamten Fläche, als auch in Durchfahrt vorgetrocknet werden.

Beim Aushärten mittels UV-Strahlung wird vorzugsweise ein Linienstrahler mit einem Reflektor verwendet. Die Linienbreite kann 5 bis 20 mm, bevorzugt 10 bis 15 mm betragen.

Die Wellenlänge des UV-Lichts liegt vorzugsweise zwischen 200 und 400 nm.

Je nach verwendetem Lack kann dabei auch ein Quecksilberstrahler verwendet werden mit einem Intensitätsmaximum zwischen 250 und 350 nm.

Je nach verwendetem Lacksystem können Strahler mit anderem Intensitätsmaxima verwendet werden, beispielsweise mit 300 ± 20 nm oder 370 ± 10 nm, wie es insbesondere mittels eisendotierter Quecksilberstrahler möglich ist.

Weiter kann auch eine plasmabasierte UV-Lampe verwendet werden. Dies ermöglicht ein schnelles Ein- und Ausschalten der Lampe sowie eine gleichbleibende Leistungsabgabe über die gesamte Lebensdauer der Lampe. Für die Aushärtung können aber auch UV-LED-Arrays mit den Wellenlängen 385 und 395 nm verwendet werden, welche den Wärmeeintrag in das Substrat, den Lack und den Stempel während des Aushärtevorgangs reduzieren.

Der Aushärteschritt erfolgt vorzugsweise zeitversetzt zum Ablegen des Stempels, insbesondere 0,1 bis 100 s, bevorzugt 0,3 bis 10 s, ganz besonders 0,5 bis 5 s zeitversetzt.

Der Aushärtebereich beziehungsweise die durch den Strahler gebildete Aushärtefront liegt vorzugsweise im Wesentlichen parallel zur Haupterstreckungsrichtung der Walze.

Das Verhältnis von Ablege- zur Aushärtegeschwindigkeit kann zwischen 20:1 und 5:1,5 liegen.

Die Geschwindigkeit der Lampe zum Aushärten kann zwischen 1 und 100 mm/s, bevorzugt zwischen 3 und 30 mm/s und besonders bevorzugt zwischen 5 und 20 mm/s liegen.

Es ist auch denkbar, bereits vor dem Prägen den Lack mittels UV partiell auszuhärten.

Weiter ist denkbar, eine lichtbasierte Aushärtung auch zusätzlich durch das Substrat vorzunehmen. Dies setzt voraus, dass das Substrat transparent für die verwendete Strahlung ist.

Die Geschwindigkeit beim Abheben des Stempels beträgt vorzugsweise 10 bis 100 mm/s.

Die gesamte Verweilzeit des Substrates in der Anlage, also Ablegen des Stempels inkl. UV-Bestrahlung, liegt vorzugsweise zwischen 1 und 500 s, bevorzugt zwischen 10 und 250 s und ganz besonders bevorzugt zwischen 15 und 100 s.

### Austauschseite 13

Es werden insbesondere Substrate mit einer Größe zwischen 0,001 und 5 m², vorzugsweise zwischen 0,04 und 1 m² beschichtet. Dabei kann sowohl im sog. "single piece flow", d.h. ein Substrat pro Prägeprozess, als auch im "multi piece flow", d.h. mehrere Substrate pro Prägeprozess, gearbeitet werden. Des Weiteren ist zu beachten, dass sowohl Endformate als auch Lagerformate, welche zu einem späteren Zeitpunkt auf Endformat geschnitten werden, geprägt werden können.

Gemäß dem erfinderischen Verfahren in Anspruch 1 wird beim Ablegen die Walze aktiv angetrieben. Die Walze rollt beim Ablegen also nicht einfach mit, sondern verfügt über einen eigenen Antrieb. Es hat sich herausgestellt, dass so eine Verformung des Stempels weitgehend vermieden werden kann. Hierbei wird die Walze derart angetrieben, dass die Umfangsgeschwindigkeit der Walze von der Vorschubgeschwindigkeit, mit der der Stempel abgelegt wird, abweicht.

Die Walze kann insbesondere mit einer geringeren Umfangsgeschwindigkeit als die Ablegegeschwindigkeit abgerollt werden, wodurch eine etwaige Längung des Stempels kompensiert werden kann und eine höhere Strukturtreue erhalten bleibt.

Die Erfindung betrifft des Weiteren eine Anlage zum Einprägen einer Struktur auf einem mit einem Lack beschichteten flächigen Substrat, insbesondere mittels eines Verfahrens wie vorstehend beschrieben.

Die Anlage umfasst einen Tisch zur Ablage des Substrats, einen flächigen Stempel, welcher an einer Seite relativ zum Tisch fixierbar bzw. fixiert ist sowie eine Walze, mittels der der Stempel auf dem Substrat ablegbar ist.

Es handelt sich insbesondere um eine Anlage, mittels der flächige Substrate nach einem Step-and-Repeat-Verfahren prozessiert werden können.

Hierzu ist der Tisch vorzugsweise verfahrbar, um die Anlage mit Substraten zu beschicken. Um unterschiedliche Substratgrößen und -dicken abzudecken sind verschiedene Einsätze für diesen Tisch denkbar. Es können Substrate im Bereich von 0,005 mm - 50 mm strukturiert werden. Des Weiteren kann in einer besonderen Ausführungsform der Tisch mit einer Halterung versehen sein, um mehrere Endformate gleichzeitig zu prägen (multi-piece flow).

Das Substrat wird also mit dem Tisch in die Anlage gefahren, der Stempel abgelegt, der Lack gehärtet und der Stempel wieder abgezogen.

Während des Ablegens und Härtens ist der Tisch fixiert und das Substrat ruht auf dem Tisch.

Erst nach dem Abheben des Stempels wird das Substrat mit dem Tisch aus der Anlage rausgefahren und kann so weiteren Prozessschritten, insbesondere einem thermischen Härtevorgang unterzogen werden.

Die zum Ablegen des Stempels verwendete Walze ist vorzugsweise austauschbar ausgebildet, insbesondere um je nach verwendetem Stempel oder Lack andere Walzen verwenden zu können, insbesondere mit anderem Gewicht und/oder anderem Durchmesser und/oder anderem Material abhängig von dem gewählten Stempelmaterial. Bei letzterem ist insbesondere der Reibungskoeffizient von Walze und Stempel zu berücksichtigen. Dabei ist darauf zu achten, dass der Haftreibungskoeffizient so groß ist, dass der Stempel in Bezug auf die Walze beim Ablegevorgang keinen Schlupf zulässt. Dies ist insbesondere dann der Fall, wenn der Haftreibungskoeffizient mindestens 0,4 beträgt.

In einer besonderen Ausführungsform der Anlage ist diese mit einer vorgelagerten Beschichtungsanlage gekoppelt, so dass insbesondere bei gleichzeitigem Stempelablegen und UV-Härten sich ein sehr hoher Durchsatz bzw. eine minimierte Prozesszeit im Sinne einer Inlinefertigung ergibt.

### Beschreibung der Zeichnungen

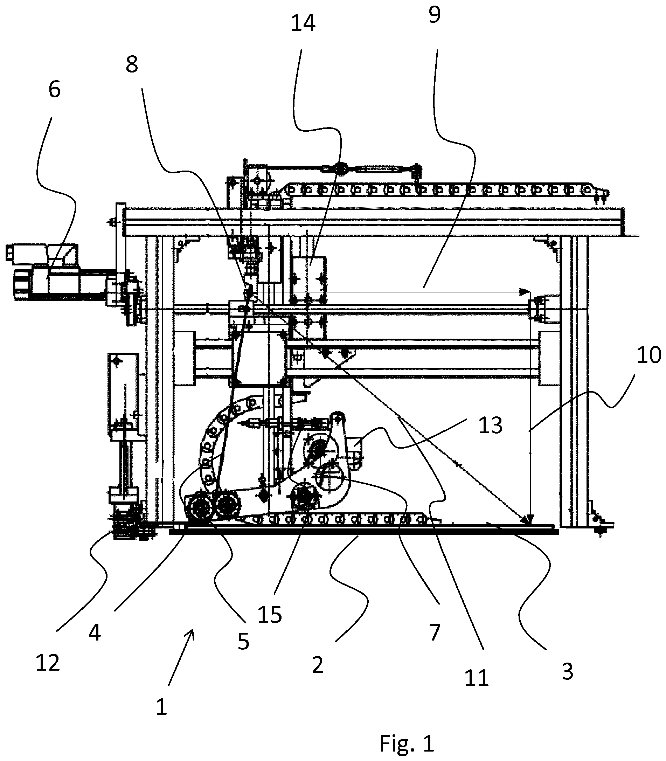

Der Gegendstand der Erfindung soll im Folgenden bezugnehmend auf ein schematisch dargestelltes Ausführungsbeispiel anhand der Zeichnungen Fig. 1 bis 3 erläutert werden.

Fig. 1 zeigt, schematisch dargestellt, in der Seitenansicht eine Anlage 1 zum Einprägen einer Struktur 1.

Die Anlage umfasst einen Tisch 2, welcher verfahrbar ausgebildet ist und in dieser Ansicht von rechts in die Anlage eingefahren werden kann. Mittel zum Verfahren eines Tisches sind dem Fachmann bekannt und nicht dargestellt.

Auf dem Tisch 2 ruht ein Substrat 3, welches insbesondere als Glas- oder Glaskeramikscheibe ausgebildet ist und welches mit einem Lack (nicht dargestellt) beschichtet ist.

Zum Einprägen einer Struktur umfasst die Anlage 1 einen flächig ausgebildeten Stempel 4.

In dieser Darstellung ist die Position des Stempels 4 zu Beginn des Prägevorgangs dargestellt.

Der Stempel 4 ist auf einer Seite mittels einer Stempelaufnahme 12 als Stempelbefestigung befestigt. Dieser kann beispielsweise eingeklemmt sein oder Aussparungen aufweisen, in welche Eingriffelemente der Stempelaufnahme (nicht dargestellt) eingreifen.

Während des Prägevorgangs ruht der Tisch 2 fest in der Anlage. Der Stempel 4 ist mithin an einer Seite durch die Stempelaufnahme 12 relativ zum Substrat 3 fixiert.

Die Anlage weist weiter eine Walze 5 auf, mittels der der Stempel 4 auf dem Substrat 3 abgelegt werden kann.

Zum flächigen Ablegen ist eine Stempelaufnahme 8 vorgesehen, welche in diesem Ausführungsbeispiel mit einer Feder versehen ist, die eine Bewegung der Stempelaufnahme 8 in vertikaler Richtung zulässt.

Bei einem Prägevorgang wird die Walze 5 über einen Antrieb 6 in horizontaler Richtung nach rechts bewegt.

Auch die Stempelaufnahme 8 wird nach rechts bewegt, so dass der Winkel des nichtabgelegten Stempelbereiches zum Substrat 3 während des Ablegevorgangs konstant bleibt.

Der Pfeil 9 symbolisiert die Bewegungsrichtung des Vorschubs der Walze nach rechts.

Aufgrund des Ablegens des Stempels wird die Stempelaufnahme 8 vertikal nach unten bewegt, deren Bewegungsrichtung wird durch den Pfeil 10 symbolisiert.

Die dadurch resultierende Bewegung der oberen Kante des Stempels 4 wird durch den Pfeil 11 symbolisiert, diese verläuft geradlinig in Richtung einer rechten Kante des Substrates 3.

Die Walze 5 ist über einen Hubmechanismus 14 anhebbar.

In dieser Darstellung ist eine UV-Lampe, welche der Walze nachgeführt wird, nicht dargestellt.

Vorzugsweise wird der auf dem Substrat 3 aufgebrachte Lack nach dem Ablegen des Stempels 4 durch den Stempel 4 hindurch gehärtet.

Sodann wird die Walze 5 mittels des hier nicht näher dargestellten Hubmechanismus 14 angehoben und der Stempel im Wesentlichen in entgegengesetzter Bewegungsrichtung, also entgegen des Pfeils 11 abgehoben.

Sodann kann das Substrat 3 mittels des Tisches 2 aus der Anlage gefahren und weiteren Verarbeitungsschritten unterzogen werden.

Die Walze 5 ist an schwenkbaren Hebeln 7 gelagert, welche über eine Schwingungsdämpfer 15 mit der Anlage beziehungsweise dem Hubmechanismus 14 verbunden ist.

Weiter wird die Walze über einen aktiven Antrieb 13 angetrieben. Die Umfangsgeschwindigkeit der Walze 5 ist derart einstellbar, dass diese insbesondere etwas geringer sein kann als die Vorschubgeschwindigkeit beim Ablegen des Stempels 4.

Der Stempel 4 sollte derart abgelegt werden, dass der Winkel des nicht abgelegten Teils des Stempels 4 (mit Ausnahme des Abschnitts, welcher direkt an der Walze anliegt) zum Substrat 3 mehr als 45°, bevorzugt mehr als 75° beträgt.

Vorzugsweise hat die Walze einen Durchmesser zwischen 3 und 50 cm.

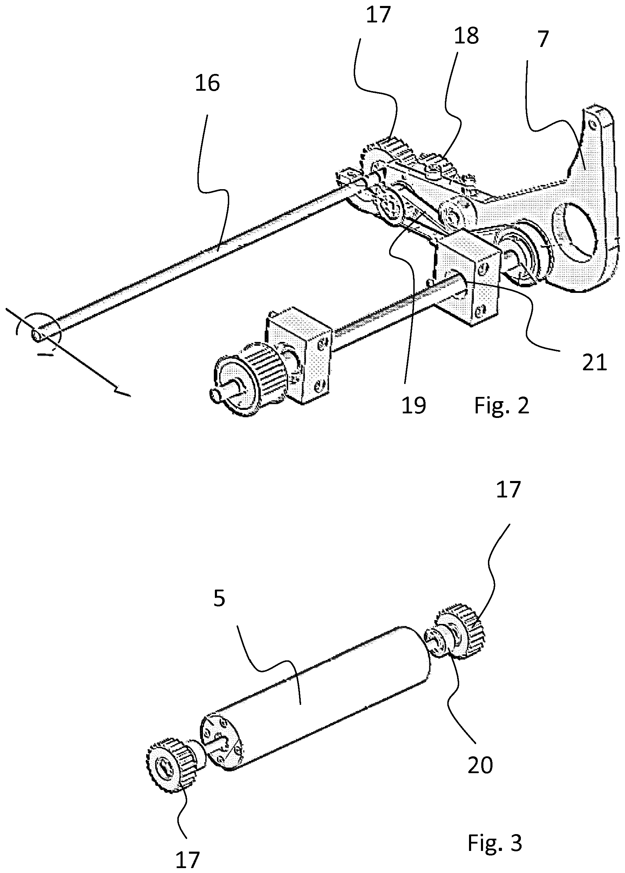

Details des Walzenmechanismus sollen im Folgenden bezugnehmend auf Fig. 2 und Fig. 3 erläutert werden. Es handelt sich um perspektivische Darstellungen von Anlagenkomponenten.

In Fig. 2 ist einer der beiden Hebel 7 dargestellt, an welchem die Walze gelagert ist.

Zu sehen ist die Welle 16 der Walze sowie die Zahnräder 17 und 18, über welche die Walze aktiv angetrieben wird.

Weiter zu erkennen ist ein Riemen 19, der dem Antrieb des Zahnrads 18 dient, über welches über das Zahnrad 17 die Walze angetrieben wird.

Es versteht sich, dass der hier dargestellte Antriebsmechanismus auch beliebig anders ausgestattet sein kann.

Die Hebel 7 sind an einem Lager 21, schwenkbar angeordnet, sodass die Walze 5 angehoben werden kann, um diese beim Abheben des Stempels zu entlasten.

Fig. 3 zeigt die Walze 5 mit den Zahnrädern 17.

Die Welle 16 der Walze 5 ist in Kugellagern 20 gelagert, welche in die Hebel (7 in Fig. 2) eingebracht werden.

Die Erfindung ermöglicht eine Strukturierung von hochviskosen Lacken mit hoher Strukturgenauigkeit, reduzierter Anzahl von Fehlstellen und hoher Prozessgeschwindigkeit.

### Bezugszeichenliste:

- 1: Anlage zum Einprägen einer Struktur
- 2: Tisch
- 3: Substrat
- 4: Stempel
- 5: Walze
- 6: Antrieb
- 7: Hebel
- 8: Stempelaufnahme
- 9: Bewegungsrichtung Vorschub Walze
- 10: Bewegungsrichtung Stempelaufnahme
- 11: Bewegung Oberkante Stempel
- 12: Stempelaufnahme
- 13: aktiver Antrieb
- 14: Hubmechanismus
- 15: Schwingungsdämpfer
- 16: Welle
- 17: Zahnrad
- 18: Zahnrad
- 19: Riemen
- 20: Kugellager
- 21: Lager

## Patentansprüche

1. Verfahren zum Einprägen einer Struktur auf einem mit einem Lack beschichteten flächigen Substrat, umfassend die Schritte:
- Ablegen eines flächigen Stempels auf dem Substrat, wobei der Stempel an einer Seite des Substrats befestigt ist und mittels einer Walze zu einer anderen Seite des Substrats hin abgelegt wird, wobei durch den Stempel eine Struktur in das Substrat eingeprägt wird;
- Härten des Lacks mittels Licht oder thermisch, derart, dass die Struktur formstabil ist;
- Abziehen des flächigen Stempels,
**dadurch gekennzeichnet, dass** die Walze derart aktiv angetrieben wird, dass die Umfanggeschwindigkeit von der Vorschubgeschwindigkeit, mit der der Stempel abgelegt wird, abweicht.

2. Verfahren zum Einprägen einer Struktur nach Anspruch 1, **dadurch gekennzeichnet, dass** der Stempel entgegen der Ablegerichtung abgezogen wird.

3. Verfahren zum Einprägen einer Struktur nach einem der vorstehenden Ansprüche, **dadurch gekennzeichnet, dass** ein Stempel verwendet wird, der mindestens die Größe der mit dem Lack beschichteten oder zu strukturierenden Fläche des Substrats hat.

4. Verfahren zum Einprägen einer Struktur nach einem der vorstehenden Ansprüche, **dadurch gekennzeichnet, dass** der Winkel eines noch nicht abgelegten Stempelbereiches gegenüber dem Substrat auf mehr als 45°, bevorzugt mehr als 75° und besonders bevorzugt mehr als 80° eingestellt wird.

5. Verfahren zum Einprägen einer Struktur nach einem der vorstehenden Ansprüche, **dadurch gekennzeichnet, dass** der Stempel mit einer Ablegegeschwindigkeit von mehr als 5 mm/s, bevorzugt mehr als 30 mm/s und besonders bevorzugt mehr als 50 mm/s abgelegt wird.

6. Verfahren zum Einprägen einer Struktur nach einem der vorstehenden Ansprüche, **dadurch gekennzeichnet, dass** der Lack mittels einer Lampe, die der Walze nachgeführt wird, gehärtet wird.

7. Verfahren zum Einprägen einer Struktur nach einem der vorstehenden Ansprüche, **dadurch gekennzeichnet, dass** der Stempel nach dem Ablegen ruht, vorzugsweise für eine Zeit von mindestens 2s.

8. Verfahren zum Einprägen einer Struktur nach einem der vorstehenden Ansprüche, **dadurch gekennzeichnet, dass** ein Lack verwendet wird, welcher im nicht gehärteten Zustand eine Viskosität von mehr als 500 mPa·s bevorzugt zwischen 600 und 1500 mPa·s und besonders bevorzugt zwischen 800 und 1100 mPa·s aufweist.

9. Anlage zum Einprägen einer Struktur auf einem mit einem Lack beschichteten flächigen Substrats, umfassend
einen Tisch zur Ablage des Substrats,
einen flächigen Stempel,
wobei der flächige Prägestempel an einer Seite relativ zum Tisch fixierbar ist,
eine Walze mittels der der Stempel auf dem Substrat ablegbar ist, **dadurch gekennzeichnet, dass** die Anlage Mittel zum Halten des flächigen Stempels an einer der fixierten Seite gegenüberliegenden Seite aufweist, welche einen Abschnitt des Stempels in einem Winkel von mehr als 45° zum Tisch halten.

10. Anlage zum Einprägen einer Struktur nach dem vorstehenden Anspruch, weiter umfassend eine Lampe, mittels der der Lack durch den Stempel hindurch härtbar ist.

11. Anlage zum Einprägen einer Struktur nach einem der vorstehenden Ansprüche 9 oder 10, **dadurch gekennzeichnet, dass** die Anlage Mittel zum Halten des flächigen Stempels an einer der fixierten Seite gegenüberliegenden Seite aufweist, welche einen Abschnitt des Stempels in einem Winkel von mehr als 75° und, bevorzugt mehr als 80° zum Tisch halten.

12. Anlage zum Einprägen einer Struktur nach einem der vorstehenden Ansprüche 9 bis 11, **dadurch gekennzeichnet, dass** die Walze einen eigenen Antrieb aufweist.

13. Anlage zum Einprägen einer Struktur nach einem der vorstehenden Ansprüche 9 bis 12, **dadurch gekennzeichnet, dass** der Tisch verfahrbar ist, um die Anlage mit Substraten zu beschicken.

## Claims

1. A method for impressing a pattern on a sheet-like substrate that is coated with a varnish, comprising the steps of:
- applying a planar stamp onto the substrate, wherein said stamp is fixed at one side of the substrate and is lowered in a direction towards another side of the substrate by a roller, whereby said stamp impresses a pattern into the substrate;
- curing the varnish by light or thermally until the pattern is dimensionally stable;
- pulling off the planar stamp;
**characterised in that** the roller is actively driven such that the peripheral speed differs from the advance rate at which the stamp is applied.

2. The method for impressing a pattern according to the preceding claim, **characterised in that** the stamp is pulled off in a direction opposite to the application direction.

3. The method for impressing a pattern according to any one of the preceding claims, **characterised in that** a stamp is used which has a size corresponding at least to the size of the surface area of the substrate coated with the varnish or to be patterned.

4. The method for impressing a pattern according to any one of the preceding claims, **characterised in that** the angle between a stamp surface not yet applied and the substrate is set to more than 45°, preferably more than 75°, and most preferably more than 80°.

5. The method for impressing a pattern according to any one of the preceding claims, **characterised in that** the stamp is applied at an application rate of more than 5 mm/s, preferably more than 30 mm/s, and most preferably more than 50 mm/s.

6. The method for impressing a pattern according to any one of the preceding claims, **characterised in that** the varnish is cured using a lamp that is driven so as to follow the roller,

7. The method for impressing a pattern according to any one of the preceding claims, **characterised in that** the stamp once applied on the substrate rests there, preferably for a duration of at least 2 seconds.

8. The method for impressing a pattern according to any one of the preceding claims, **characterised in that** a varnish is used which in its non-cured condition has a viscosity of more than 500 mPa·s, preferably between 600 and 1500 mPa·s, and most preferably between 800 and 1100 mPa·s.

9. An apparatus for impressing a pattern on a sheet-like substrate that is coated with a varnish, comprising:
a table for supporting the substrate;
a planar stamp,
wherein the planar impressing stamp is fixable at one end relative to the table;
a roller adapted to apply the stamp onto the substrate;
**characterised in that** the apparatus comprises means for holding the planar stamp at an end opposite to the fixed end, which hold a portion of the stamp at an angle of more than 45° relative to the table.

10. The apparatus for impressing a pattern according to the preceding claim, further comprising a lamp adapted to cure the varnish through the stamp.

11. The apparatus for impressing a pattern according to any one of the preceding claims 9 to 10, **characterised in that** the apparatus comprises means for holding the planar stamp at an end opposite to the fixed end, which hold a portion of the stamp at an angle of more than 75°, and most preferably more than 80° relative to the table.

12. The apparatus for impressing a pattern according to any one of the preceding claims 9 to 11, **characterised in that** the roller has its own drive.

13. The apparatus for impressing a pattern according to any one of the preceding claims 9 to 12, **characterised in that** the table is displaceable for feeding substrates into the apparatus.

## Revendications

1. Procédé d'estampage d'une structure sur un substrat plat recouvert d'une peinture, comprenant les étapes suivantes :
- dépôt d'un poinçon plat sur le substrat, le poinçon étant fixé sur un côté du substrat et étant déposé en direction d'un autre côté du substrat à l'aide d'un rouleau, le poinçon réalisant l'estampage d'une structure dans le substrat ;
- durcissement de la peinture à l'aide de lumière ou par voie thermique, de telle sorte que la structure présente une forme stable ;
- retrait du poinçon plat,
**caractérisé en ce que** le rouleau est entraîné activement de telle façon que la vitesse périphérique soit différente de la vitesse d'avance à laquelle est déposé le poinçon.

2. Procédé d'estampage d'une structure selon la revendication 1, **caractérisé en ce que** le poinçon est retiré dans le sens opposé au sens de dépôt.

3. Procédé d'estampage d'une structure selon l'une des revendications précédentes, **caractérisé en ce que** l'on utilise un poinçon qui présente au moins les dimensions de la surface du substrat devant être recouverte avec la peinture ou devant être structurée.

4. Procédé d'estampage d'une structure selon l'une des revendications précédentes, **caractérisé en ce que** l'on règle l'angle d'une partie de poinçon non encore déposée, par rapport au substrat, à une valeur supérieure à 45 °, de préférence supérieure à 75 ° et de façon particulièrement avantageuse supérieure à 80 °.

5. Procédé d'estampage d'une structure selon l'une des revendications précédentes, **caractérisé en ce que** le poinçon est appliqué à une vitesse de dépôt supérieure à 5 mm/s, de préférence supérieure à 30 mm/s et de façon particulièrement avantageuse supérieure à 50 mm/s.

6. Procédé d'estampage d'une structure selon l'une des revendications précédentes, **caractérisé en ce que** la peinture est durcie à l'aide d'une lampe qui passe à la suite du rouleau.

7. Procédé d'estampage d'une structure selon l'une des revendications précédentes, **caractérisé en ce que**, après le dépôt, le poinçon est au repos, de préférence pendant un laps de temps d'au moins 2 s.

8. Procédé d'estampage d'une structure selon l'une des revendications précédentes, **caractérisé en ce que** l'on utilise une peinture qui, à l'état non durci, présente une viscosité supérieure à 500 mPa·s, de préférence comprise entre 600 et 1 500 mPa·s, et de façon particulièrement avantageuse comprise entre 800 et 1 100 mPa·s.

9. Installation d'estampage d'une structure sur un substrat plat recouvert d'une peinture, comprenant
une table destinée au dépôt du substrat,
un poinçon plat,
le poinçon d'estampage plat pouvant être fixé sur un côté par rapport à la table,
un rouleau, à l'aide duquel le poinçon peut être déposé sur le substrat, **caractérisée en ce que** l'installation présente des moyens qui sont destinés à maintenir le poinçon plat sur un côté opposé au côté fixé et qui maintiennent une partie du poinçon sous un angle de plus de 45 ° par rapport à la table.

10. Installation d'estampage d'une structure selon la revendication précédente, comprenant en outre une lampe à l'aide de laquelle la peinture peut être durcie à travers le poinçon.

11. Installation d'estampage d'une structure selon l'une des revendications précédentes 9 ou 10, **caractérisée en ce que** l'installation présente des moyens qui sont destinés à maintenir le poinçon plat sur un côté opposé au côté fixé et qui maintiennent une partie du poinçon sous un angle de plus de 75 °, de préférence de plus de 80° par rapport à la table.

12. Installation d'estampage d'une structure selon l'une des revendications précédentes 9 à 11, **caractérisée en ce que** le rouleau présente son propre dispositif d'entraînement.

13. Installation d'estampage d'une structure selon l'une des revendications précédentes 9 à 12, **caractérisée en ce que** la table peut être déplacée pour charger l'installation avec des substrats.
